# EUROPEAN PATENT SPECIFICATION

(11) **EP 3 187 254 B1**
(45) Date of publication and mention of the grant of the patent: **02.09.2020**
(21) Application number: 15203160.5
(22) Date of filing: 30.12.2015
(51) Int. Cl.: B01F 17/44, C10M 145/18, C10M 173/00, C10N 30/06, C10N 30/18, C10N 40/20

(54) **POLYMERIC EMULSIFIER AND LUBRICITY ADDITIVES FOR AQUEOUS METAL REMOVAL, FORMING, ROLLING OR OTHER APPLICATIONS**
POLYMERISCHER EMULGATOR UND SCHMIERADDITIVE ZUM ENTFERNEN, FORMEN, WALZEN VON WÄSSRIGEM METALL ODER ANDERE ANWENDUNGEN
ÉMULSIFIANT POLYMÈRE ET ADDITIFS À POUVOIR LUBRIFIANT DANS L'ÉLIMINATION DE MÉTAUX EN SOLUTION AQUEUSE, FORMATION, LAMINAGE OU AUTRES APPLICATIONS

(43) Date of publication of application: 05.07.2017
(73) Proprietor: Italmatch SC, LLC, Bedford Park IL 60638 (US)
(72) Inventor: ROSS, Matthew Paul, Manchester, M34 5GA (GB); WILLIAMS, Carl, Newcastle under Lyme Staffordshire (GB); ANDERSON, Steven, Moseley, Virginia 23120 (US)
(74) Representative: SSM Sandmair

(56) References cited:
- EP-A2- 0 004 426
- EP-A2- 0 657 522
- WO-A1-2008/074983
- US-A- 4 010 041
- Wilma F Bergfeld ET AL: "Safety Assessment of Trimellitic Anhydride Copolymers as Used in Cosmetics Status: Scientific Literature Review for Public Comment Release Date: The 2015 Cosmetic Ingredient Review Expert Panel members are: Chairman", , 1 June 2015 (2015-06-01), XP055280624, Retrieved from the Internet: URL:http://www.cir-safety.org/sites/defaul t/files/melply062015slr.pdf

## Description

### FIELD

The present invention generally relates to fluids for metalworking and other applications and, in particular, to additives useful in such fluids.

### BACKGROUND

Metalworking operations include rolling, forging, hot-pressing, blanking, bending, stamping, drawing, cutting, punching, spinning and the like. Such operations generally use a metalworking fluid to provide lubrication, cooling and removal of swarf, which can reduce the power required, prevent sticking, or decrease wear of the materials and tools that are used. Metalworking fluids may comprise a variety of fluids, including straight oils, soluble or emulsions, semi-synthetic fluids, and synthetic fluids. However, traditional emulsifiers used in most metalworking applications were not designed for metalworking use, and accordingly suffer from a number of defects. For instance, emulsifiers tolerant of hard water tend to produce excessive foam in soft water. In contrast, soft water low foam emulsifiers tend to produce scum, leading to depletion in hard waters. Emulsifiers such as amides and sulfonates are highly susceptible to bacterial degradation in use, leading to shortened fluid life and a heavy reliance on toxic substances such as biocides to inhibit degradation. Accordingly, improvements in emulsifiers for metalworking applications are needed.

### SUMMARY

The present invention generally relates to fluids for metalworking and other applications and, in particular, to additives useful in such fluids. In one aspect, the present invention is directed to a composition acccording to claim 1, comprising: a molecular compound comprising at least, a first portion derived from a polydentate acid, a second portion derived from polyalkylene glycol, and a third portion derived from an anhydride. The first portion is covalently bonded to the second portion, and the second portion is covalently bonded to the third portion.

In another set of embodiments, the composition comprises a compound as defined in any of claims 1-9, formed by a method comprising covalently bonding a polydentate acid, a polyalkylene glycol and/or an ethoxylated alcohol, and an anhydride to form the compound

In yet another set of embodiments, the composition comprises a compound formed by a method comprising covalently bonding a polydentate acid, a polyalkylene glycol and/or an ethoxylated alcohol, and a succinic anhydride to form the compound.

The present invention, in another aspect, is directed to a method according to claim 10, comprising polydentate acid, an anhydride and a polyalkylene glycol and/or an ethoxylated alcohol to produce a product as defined in claims 1-9.

Other advantages and novel features of the present invention will become apparent from the following detailed description of various non-limiting embodiments of the invention when considered in conjunction with the accompanying figures,

### BRIEF DESCRIPTION OF THE DRAWINGS

Non-limiting embodiments of the present invention will be described by way of example with reference to the accompanying figures, which are schematic and are not intended to be drawn to scale. In the figures, each identical or nearly identical component illustrated is typically represented by a single numeral. For purposes of clarity, not every component is labeled in every figure, nor is every component of each embodiment of the invention shown where illustration is not necessary to allow those of ordinary skill in the art to understand the invention. In the figures:

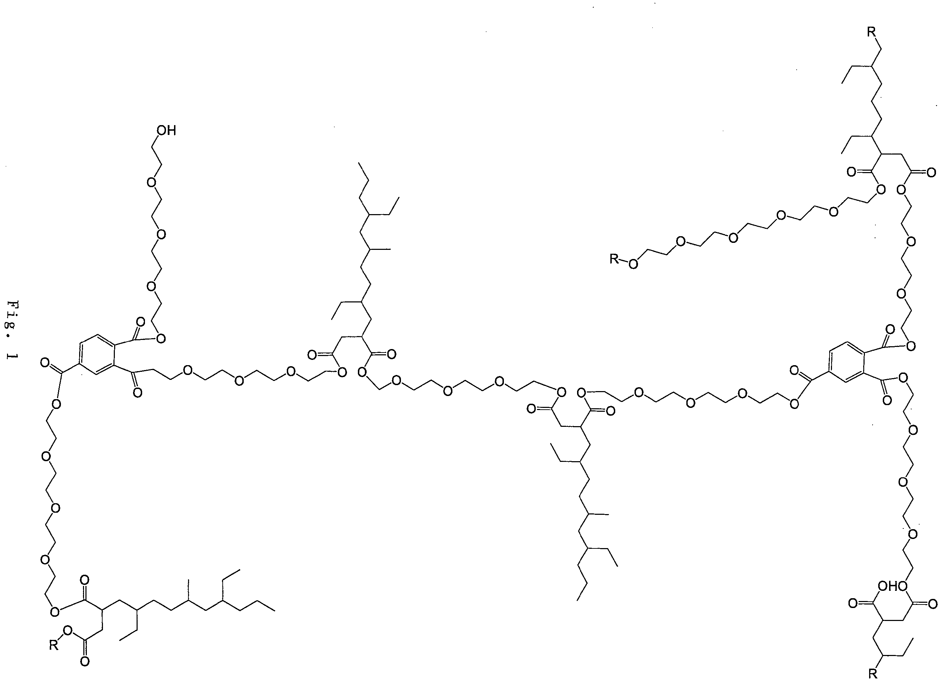

Fig. 1 illustrates a compound in accordance with one embodiment of the invention.

### DETAILED DESCRIPTION

The present invention generally relates to compounds useful in fluids for metalworking and other applications

For instance, some aspects of the invention are generally directed to molecular compounds comprising polydentate acids polyalkylene glycols, and anhydrides (e.g., alkyl and/or alkenyl succinic anhydrides), which are reacted together, e.g., covalently, to form a compound useful for such fluids. An example of a polydentate acid is trimellitic acid; an example of a polyalkylene glycol is polyethylene glycol; an example of an anhydride is poly(isobutenylsuccinic anhydride). Such compounds can be used, for example, for emulsification and/or lubrication purposes, and/or as corrosion inhibiting agents. Other embodiments not according to the invention are generally directed to fluids containing such compounds, which may be used for metalworking or other applications, methods for making or using such compounds, kits including such compounds, or the like.

In one aspect, the present invention is generally directed to compositions comprising polydentate acid portions, polyalkylene glycol portions, and anhydride portions, which are covalently bonded together to form compounds in various arrangements. For example, a compound may have one or more polydentate acid portions, one or more of polyalkylene glycol portions, and one or more anhydride portions Optionally, other portions may be present as well. The composition includes one or more portions derived from polydentate acids having three or more -COOH moieties. Examples of polydentate acids include, but are not limited to: tricarboxylic acids such as: citric acid, isocitric acid, aconitic acid, propane-1,2,3-tricarboxytic acid, 1,2,4-butanetricarboxylic acid; aromatic tricarboxylic acids such as: trimesic acid, trimellitic acid, hemimellitic acid; tetra acids such as: ethylenediaminetetraacetic acid, 1,2,3,4-butanetetracarboxylic acid, 1,2,4,5-benzenetetracarboxylic acid, furantetracarboxylic acid, 1,2,3,4-cyclobutanetetracarboxylic acid; other polydentate acids include mellitic acid, and derivatives of any of these. Thus, in one embodiment, the composition includes a portion derived from a polydentate, such as citric acid or trimellitic acid. In some cases, the composition may include more than one such portion, and the portions may be the same or different. For instance, each such portion may be independently derived from one or more polydentate acids.

A polydentate acid has three, or more -COOH moieties that can react in various ways. For example, the structures of trimellitic acid and citric acid are respectively as follows:

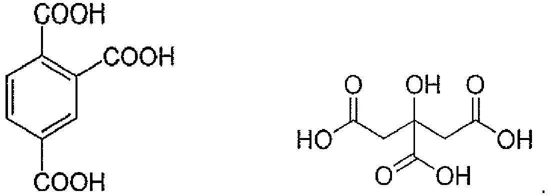

In addition, in some embodiments, more than one polydentate acid portion may be present in a compound. In such cases, the polydentate acid portions may independently be the same or different. See Fig. 1 for a non-limiting example of a structure containing trimellitic acid portions.

Without wishing to be bound by any theory, it is believed that such polydentate acid functionality may provide a macro-structural component, for example, by providing multiple reaction locations via the various -COOH moieties. Such functionality may be important, for instance, for emulsion stability, emulsion particle size, etc., by facilitating a macromolecular structure that, for example, enhances film formation or emulsion stabilization.

The compound also contains one or more portions derived from polyalkylene glycols.

In some cases, the composition may include more than one such polyalkylene glycol portion, and the portions may be the same or different. These may be covalently bound to the polydentate acid portions (or derivative thereof), for instance, through esterification reactions where an -OH moiety on the polyalkylene glycol reacts with a -COOH moiety to produce water and an ester bond. Such portions may arise from, for example, polyethylene glycol and/or ethoxylated alcohols that may be present. In some embodiments, the polyalkylene glycol portions may be useful for controlling the hydrophilic-lipophilic balance of the compound, e.g., as discussed below.

Non-limiting examples of polyalkylene glycols include polyethylene glycols. The polyethylene glycol portions may include any suitable number of ethylene glycol repeat units (i.e., - CH₂-CH₂-O-repeat units). In some cases, there may be less than 1,000, less than 500, less than 250, less than 100, less than 50, or less than 25 ethylene glycol repeat units. In some embodiments, for example, a polyethylene glycol portion may contain 1, 2, 3, 4, 5, 6, 7, 8, 9, 10, or more repeat units.

The polyalkylene glycol portions may also have any suitable molecular weights (M_{w}), for example, less than about 500,000 daltons, less than about 100,000 daltons, less than about 50,000 daltons, less than about 20,000 daltons, less than about 10,000 daltons, less than about 5,000 daltons, less than about 1,000 daltons, less than about 750 daltons, less than about 500 daltons, less than about 400 daltons, less than about 300 daltons, etc.

The polyalkylene glycol portions may be unsymmetrical in some embodiments with an alkyl chain present at one end of the molecule and a hydroxyl group at the other. The alkyl chain can be of any length, e.g., C₁ to C₂₈, for instance, C₁₀ to C₁₈. For example, the alkyl chain may be C₁, C₂, C₃, C₄, C₅, C₆, C₇, C₈, C₉, C₁₀, C₁₁, C₁₂, C₁₃, C₁₄, C₁₅, C₁₆, C₁₇, C₁₈, C₁₉, C₂₀, C₂₁, C₂₂, C₂₃, C₂₄, C₂₅, C₂₆, C₂₇, C₂₈, C₂₉, C₃₀, etc. The alkyl chain can be straight-chained or branched, and may in some cases contain other function groups. The polyalkylene glycol portions can also be terminated with carboxylic acid or thiol groups in some cases, e.g., rather than hydroxyl groups.

In addition, as discussed, more than one polyethylene glycol portion may be present in a compound; if so, the polyethylene glycol portions may each independently have the same or different numbers of repeat units. A non-limiting example of a structure containing polyethylene glycol portions can be seen in Fig. 1. Several different polyethylene glycol portions are present in this example. Other suitable polyalkylene glycols include: polypropylene glycol, polybutylene glycols both straight chain and branched, poly-THF (tetrahydrofuran), copolymers of different alkylene glycol monomers such as EO-PO (ethylene oxide-propylene oxide) copolymers, oil soluble PAGs (polyalkylene glycols) or OSPs (oil soluble polyalkylene glycols) such as PO-BO copolymers (propylene oxide-butylene oxide), poly alpha olefins, polystyrene oxides, and other polyether type compounds.

The compound also contains one or more portions derived from anhydrides selected from succinic anhydride, alkyl succinic anhydride, alkenyl succinic anhydride and/or poly(isobutenylsuccinic anhydride), e.g., covalently bonded to the polydentate acid portions and/or the polyalkylene glycol portions. In some cases, more than one such anhydride portion may be present within a compound, and such portions may independently be the same or different. For instance, each such portion may be independently derived from one or more anhydrides.

As well as anhydrides, the parent carboxylic acids and other derivatives thereof are also disclosed but not according to the invention, such as esters and acid halides. In some embodiments, the anhydride may be the initial form of the anhydride portion, prior to its incorporation into a compound, i.e., the anhydride may link to the compound via ester groups formed by the anhydride compound reacting with alcohol groups (R-OH), e.g., as follows:

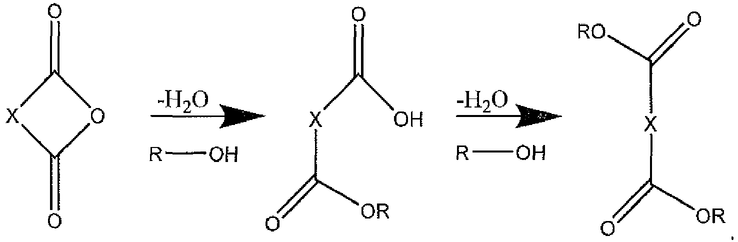

In some cases, the composition may include one or more alkyl succinic anhydride portion and/or one or more alkenyl succinic anhydride portion. One non-limiting example of an alkenyl succinic anhydrides is poly(isobutenylsuccinic anhydride) ("PIBSA"). Other non-limiting examples include alkenyl succinic anhydrides that react with alcohols to form the following moiety: 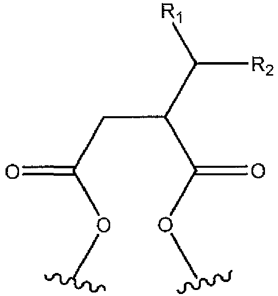 where the wavy lines indicate covalent bonding to other portions of the compound, e.g., to polydentate acid portions (or derivatives thereof) and/or polyalkylene glycol portions. R₁ may be an H or an alkyl, e.g., containing between 1 and 20 carbon atoms, and may be linear (i.e., an n-alkyl) or branched, and/or may contain unsaturated groups such as C=C; it may also be substituted or unsubstituted. R₂ may be an alkyl, e.g., containing between 1 and 20 carbon atoms, and may be linear (i.e., an n-alkyl) or branched or may contain unsaturated groups such as C=C, and it may be substituted or unsubstituted.

One non-limiting example of an anhydride is: 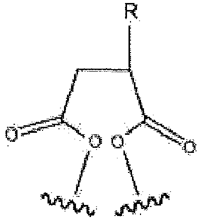 where the wavy lines indicate covalent bonding to other portions of the compound, e.g., to polydentate acid portions (or derivatives thereof) and/or polyalkyl glycol portions, such as those discussed herein. R may be an alkyl or an alkenyl group (e.g., containing 1, 2, 3, 4, 5, 6, 7, 8, 9, 10, 11, 12, 13, 14, 15, 16, 17, 18, 19, 20, or more carbon atoms), and R may be linear or branched, and/or substituted or unsubstituted. As a non-limiting example, R may be a polyisobutenyl group, including any of those described herein. A specific non-limiting example of an anhydride is: 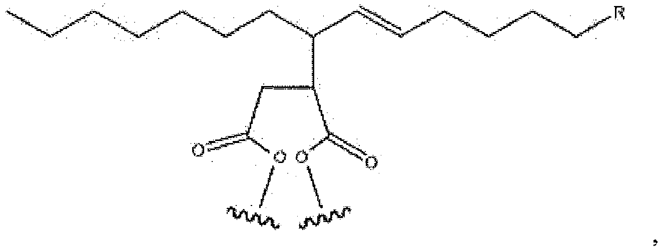 where R in this structure may be a C₁ to C₆ alkyl chain, e.g., containing 1, 2, 3, 4, 5, or 6 carbon atoms, and may be linear (i.e., an n-alkyl) or branched. R may also be substituted or unsubstituted. Other examples include branched forms of the alkyl chains within the above structure.

It should be noted that upon reaction, the 5-member ring of the succinic anhydride portion opens and reacts with other potions (e.g., to polyalkylene glycol) within the compound, as indicated in the structure above with the wavy lines. Non-limiting examples of such ring-opened alkenyl succinic anhydride portion are shown in Fig. 1.

Such anhydride portions (or derivatives thereof) may be useful, for example, to inhibit degradation, e.g., via bacterial attack, or to control foaming without scum formation, e.g., in applications involving soft water or hard water.

The anhydride portion may have any suitable molecular weight. In some embodiments, the anhydride portion may have a molecular weight less than about 20,000 daltons, less than 3,000 daltons, e.g., between about 100 daltons and about 5,000 daltons, between about 100 daltons and about 20,000 daltons, between about 200 daltons and about 4,000 daltons, between about 200 daltons and about 1,000 daltons, or between about 300 daltons and about 1,000 daltons, between about 300 daltons to about 600 daltons, or between about 400 daltons and about 500 daltons. In some cases, the molecular weight may be controlled by R groups or repeat units within the portion (e.g., the number of repeat units of isobutylene in PIBSA). In addition, in some cases, more than one anhydride portion (or derivative thereof) may be present within a compound, and such portions may independently be the same or different, and each portion may independently be, for example, derived from an anhydride portion or an anhydride derivative, etc. In addition, in some cases, the compound may include imide versions of the anhydride compounds thereof, e.g. succinimides, in addition to the anhydride portions described herein. Many of these anhydrides can be readily obtained commercially.

It should be noted that the polydentate acid portions, polyalkylene glycol portions, and anhydride portions are covalently bonded directly together, to form the compound. In some cases, for example, the polydentate acid portions may be covalently bonded to the polyalkylene glycol portions and/or the anhydride portions. Likewise, in some cases, the anhydride portions may be covalently bonded to the polydentate acid portions and/or the polyalkylene glycol portions. In some cases, the polyalkylene glycol portions may be covalently bonded to the polydentate acid portions and/or the anhydride portions.

As mentioned, in some embodiments, there may be more than one polydentate acid portion, and/or more than one polyalkylene glycol portion, and/or more than one anhydride portion present in the compound. Thus, for example, the compound may have a molecular weight of at least about 1000 daltons. For example, the molecular weight may be between about 1000 and about 200,000 daltons, between about 1000 and about 100,000 daltons, between about 1100 and about 100,000 daltons, between about 1200 and about 10,000 daltons, between about 2000 and about 20,000 daltons, or between about 2000 and about 10,000 daltons. As additional examples, the compound has a molecular weight of about 3000 to 5000 daltons, e.g., about 4000 daltons, about 5,000 to about 10,000 daltons, or about 5,000 to about 15,000 daltons, about 5,000 to about 25,000 daltons, or about 5,0000 to about 50,000 daltons. In some cases, the compound may have a weight average molecular weight suitable for emulsification (for instance, between about 3,000 to about 5,000 daltons, or any other suitable molecular weights described herein). In certain embodiments, the compound may have a weight average molecular weight suitable for lubricity (for example, between about 5,000 daltons to about 50,000 daltons, or any other suitable molecular weights described herein). In addition, in some embodiments, the polymers may be suitable for use as corrosion inhibiting agents.

Within such compounds, the portions derived from polydentate acids thereof, the portions derived from polyalkylene glycols, and the portions derived from anhydrides are present in the following molar ratios: the ratio of the polydentate acid portions to the alkyl and/or alkenyl succinic anhydride portions is between 1:0.1 and 1:1, for instance, between 1:0.2 and 1:09, or 1:0.4 and 1:0. 8; the molar ratio of the alkyl and/or alkenyl succinic anhydride portions to the ethylene glycol portions is between 0.1:1 and 0.5:1, or between 0.2:1 and 0.3: 1; and the overall mole ratio of the polydentate acid portion to the polyalkylene glycol portion is between 1:1 to 1:4, for instance, between 1:2 to 1:3.

In addition, in some cases, a range of compounds such as these may be present within a mixture, which may have the same or different structures.

Some aspects of the invention are also generally directed to techniques and methods for making any of the compounds discussed herein. For example, in one set of embodiments, the invention is generally directed to reacting a polydentate acid and/or anhydride, a succinic anhydride, and a polyalkylene glycol and/or an ethoxylated alcohol to produce a compound, e.g., as discussed herein. Such reactions may include esterification reactions. In some cases, the succinic anhydride and the polyalkylene glycol and/or the ethoxylated alcohol may first be reacted to produce an intermediate, then the intermediate with the polydentate acid, although in other cases, a compound may be prepared by adding some or all of the reactants to a suitable reaction vessel and heating the reactants together for a suitable length of time to produce the compounds. For instance, reactants may be mixed together and heated until the compounds have a desired acid value, e.g., any of the acid values described herein.

A suitable catalyst can also be optionally used to help expedite the reaction. Non-limiting examples of such suitable catalysts are p-toluene sulphonic acid or methane sulphonic acid. The reaction mixture may also optionally include a small quantity of a substance added to control the color of the reaction mixture. Suitable compounds include anti-oxidants or oxygen scavengers. Non-limiting examples of suitable anti-oxidants include phosphites, specific examples of which include triisodecyl phosphite, butylated hydroxytoluene, and the like.

In some cases, a reaction mixture may be heated to a temperature of at least about 100 °C, at least about 120 °C, at least about 150 °C, at least about 160 °C, at least about 170 °C, at least about 180 °C, at least about 190 °C, at least about 200 °C, or any other suitable temperature. In some cases, the temperature may be no more than about 250 °C, no more than about 240 °C, no more than about 230 °C, no more than about 220 °C, no more than about 210 °C, or no more than about 200 °C. In some cases, the reaction may be performed under partial vacuum (e.g., less than 700 mmHg, less than 500 mmHg, or less than 300 mmHg), or under enriched nitrogen (e.g., at least about 80%, at least about 85%, at least about 90%, or at least about 95% nitrogen, on a volumetric basis).

Such compounds may be used, in certain aspects, as surfactants, emulsifiers, or lubricants. In some cases, the hydrophilic-lipophilic balance (HLB) may be controlled, for example, by controlling the polyalkylene glycol portions within the compound, e.g., to produce desired effects. The hydrophilic-lipophilic balance of a compound is generally a measure of the degree to which it is hydrophilic or lipophilic. Techniques for determining HLB are known to those of ordinary skill in the art, and include Griffin's method (see, e.g,. Griffin, "Classification of Surface-Active Agents by 'HLB,'" J. Soc. Cosmetic Chem., 1(5):311-326, 1949, or "Emulsions," W.C. Griffin, in the Kirk-Othmer Encyclopedia of Chemical Technology, 3rd Edition, 8, 900-930 (1979)). In various embodiments, the HLB of the compound (or average HLB of a mixture) may be less than about 18, less than about 16, less than about 8, less than about 5, or less than about 3. In some cases, for example, the HLB may be between about 8 and about 16, e.g., about 11.

In addition, in some cases, the compound may have an acid value of between about 1 mg KOH/g to about 40 mg KOH/g. For example, the acid value may be about 1 mg KOH/g and about 20 mg KOH/g, or between about 2 mg KOH/g and about 40 mg KOH/g. In some cases, the acid value may be at least about 3 mg KOH/g, at least about 4 mg KOH/g, at least about 5 mg KOH/g, at least about 8 mg KOH/g, at least about 10 mg KOH/g, at least about 12 mg KOH/g, etc. For example, the compound may have an acid value of between about 2 mg KOH/g and about 12 mg KOH/g, between about 5 mg KOH/g and about 20 mg KOH/g, between about 8 and about 12 mg KOH/g, or between about 2 mg and about 8 mg KOH/g. In some cases, lower acid values (e.g., between about 2 mg KOH/g and about 10 mg KOH/g, or other acid values described herein) may be useful for lubrication. In certain embodiments, somewhat higher acid values (e.g., between about 7 mg KOH/g and about 15 mg KOH/g, or other acid values described herein) may be useful for emulsification. Generally, the acid value is a measure of the acidity of a compound, and is the mass of potassium hydroxide (KOH) in milligrams that is required to neutralize one gram of the compound. Those of ordinary skill in the art will be aware of techniques for determining acid values, e.g., by using ASTM D974. In some cases, acid values are reported without units, i.e., the "mg KOH/g" is implicitly present.

As mentioned, compounds such as those discussed herein may be used in a wide variety of applications. For example, the compounds may be used as surfactants, emulsifiers, corrosion inhibitors, or lubricants. As a non-limiting example, in one set of embodiments, a compound as discussed herein may be used within a metalworking fluid, e.g., for various metalworking applications such as deforming and removal processes such as rolling, forging, hot-pressing, blanking, bending, stamping, drawing, cutting, milling, punching, spinning and the like. Metal working fluids comprising compounds such as those disclosed herein can be, for example, fully synthetic, semi-synthetic, milky oil in water emulsions, or neat oils. In some embodiments, the metalworking fluid may include a lubricating oil and one or more compounds such as those disclosed herein, which may be used as additives within the lubricating oil.

Examples of lubricating oils include, but are not limited to, natural and/or synthetic oils. Examples of lubricating oils include liquid petroleum oils and solvent-treated or acid-treated mineral lubricating oils of the paraffinic, naphthenic and mixed paraffinic-naphthenic types. Additional examples of oils include hydrocarbon oils and halo-substituted hydrocarbon oils such as polymerized and interpolymerized olefins (e.g., polybutylenes, polypropylenes, propylene-isobutylene copolymers, chlorinated polybutylenes, poly(1-hexenes), poly(1-octenes), poly(1-decenes), etc.); alkylbenzenes (e.g., dodecylbenzenes, tetradecylbenzenes, dinonylbenzenes, di(2-ethylhexyl)benzenes); polyphenyls (e.g., biphenyls, terphenyls, alkylated polyphenyls), etc. Other examples include dicarboxylic acid esters (e.g., phthalic acid, succinic acid, alkyl succinic acids and alkyl and/or alkenyl succinic acids, maleic acid, azelaic acid, suberic acid, sebacic acid, fumaric acid, adipic acid, linoleic acid dimer, malonic acid, alkyl malonic acids, alkenyl malonic acids) with a variety of alcohols (e.g., butyl alcohol, hexyl alcohol, dodecyl alcohol, 2-ethylhexyl alcohol, ethylene glycol, diethylene glycol monoether, propylene glycol); also ricinoleic acid and self-polymerized versions thereof. Still other examples include silicon-based oils such as the polyalkyl-, polyaryl-, polyalkoxy-, or polyaryloxysiloxane oils and silicate oils, such tetraethyl silicate, tetraisopropyl silicate, tetra-(2-ethylhexyl) silicate, tetra-(4-methyl-2-ethylhexyl) silicate, tetra-(p-tert-butylphenyl) silicate, hexa-(4-methyl-2-pentoxy)disiloxane, poly(methyl)siloxanes and poly(methylphenyl)siloxanes.

A variety of other additives may be present within the metalworking fluid. Non-limiting examples include: coupling agents, antiwear additives, extreme pressure additives such as phosphorous compounds such as phosphate esters and sulfur compounds such as polysulfides, antioxidants, pH buffers, oil (e.g., naphthenic or paraffinic oils), water (e.g., tap water, distilled water, deionized water, treated water, etc.), biocides (e.g., bacteriocides or fungicides), foam inhibitors, rust inhibitors, lubricating agents such as ricinoleic acid or self-polymerized versions thereof, corrosion inhibitors, polymers, or the like. Many of these are commercially available.

Non-limiting examples of corrosion inhibitors include alkali and alkanolamine salts of carboxylic acids, undecandioic/dodecandioic acid and its salts, C₄₋₂₂ carboxylic acids and their salts, boric acids, compounds and their salts, tolytriazole and its salts, benzotriazoles and its salts, imidazolines and its salts, alkanolamines and amides, sulfonates, alkali and alkanolamine salts of naphthenic acids, phosphate ester amine salts, alkali nitrites, alkali carbonates, carboxylic acid derivatives, alkylsulfonamide carboxylic acids, arylsulfonamide carboxylic acids, fatty sar-kosides, phenoxy derivatives and sodium molybdate. Other non-limiting examples include: tertiary polyamines such as pentamethyl dipropyl-triamine and salts thereof, such as alkyl polyalkylene glycol ether phosphate salts. Many of these are commercially available.

Non-limiting examples of alkalinity agents to control the pH include alkanolamines (primary, secondary and tertiary), aminomethylpropanol (AMP-95), diglycolamine (DGA), monoethanolamine (MEA), monoisopropanolamine (MIPA), butylethanolamine (NBEA), dicylclo-hexylamine (DCHA), diethanolamine (DEA), butyldiethanolamine (NBDEA), triethanolamine (TEA), metal alkali hydroxides, potassium hydroxide, sodium hydroxide, magnesium hydroxide, lithium hydroxide, metal carbonates and bicarbonates, sodium carbonate, sodium bicarbonate, potassium carbonate and potassium bicarbonate.

The compounds disclosed herein may also be used in other types of emulsified oil systems besides metalworking fluids. For example, the compounds may be used in oil field chemicals such as drilling fluids and cementing chemicals, paper chemicals (i.e., chemicals used in the manufacture of paper), explosive emulsions, rock drill lubricants, mining lubricants, or the like.

Unless clearly indicated to the contrary, molecular weights as used herein are weight average molecular weights (abbreviated herein as M_{w}).

The following examples are intended to illustrate certain embodiments of the present invention, but do not exemplify the full scope of the invention.

### EXAMPLE 1

This example is generally directed to polymeric additives that are designed for aqueous metalworking applications, such as metal removal, forming or rolling. The additives in this example are emulsifiers with lubricity attributes or lubricity with co-emulsification attributes determined by molecular weight/reagent charge ratio/acid value. Some embodiments are directed to a low foaming hard water tolerant long life emulsifier for metal removal applications. An example of such a compound is shown in Fig. 1. This polymeric additive can be used in place of most existing metal working emulsifiers at lower overall treat rate and with improved overall performance.

The polymeric additives in this example are built by the reaction of components selected to provide functionalities desirable for metalworking applications. Branched components, such as PIBSAs (poly(isobutenylsuccinic anhydride)s), were selected to contribute low foam and foam control or air release in both soft water and hard water without scum formation. Branched components were selected to inhibit degradation by bacterial attack.

Hydrophilic components, such as polyethylene glycols, were selected to modify HLB (the Hydrophilic-Lipophilic Balance) in conjunction with the PIBSA moieties. By selection of polyethylene glycols and the charge ratio with the PIBSAs, the HLB could be varied from low HLB (desirable for lubricity) to medium HLB (desirable for emulsification) and any combinations in between.

The addition of a polydentate acid functionality, such as trimellitic acid (and/or anhydride), citric acid or similar provides a macro-structural component. This may be important to the long life emulsion stability, emulsion particle size, etc., by facilitating a macromolecular structure that enhances film formation and emulsion stabilization.

The molecular weight can be controlled by controlling the both charge ratio of the components and the acid value. The polymer may be produced via esterification reactions with the acid value falling as both acid and hydroxyl moieties are consumed in the esterification process. Molecular weights from 1000 to greater than 100,000 daltons could be produced, as determined by the application requirements. For example good emulsification has been demonstrated for polymers between 2000 and 10,000 daltons.

A weight average molecular weight of between about 3000 and 5,000 Daltons may be used for polymers used primarily for emulsification and between 5,000 and about 10,000 Daltons may be used for polymers used primarily for lubrication. Although it should be understood that polymers with weight average molecular weight of between 3000 and about 5,000 Daltons may offer lubrication benefits and those between about 5,000 and about 10,000 Daltons may offer emulsification benefits.

### EXAMPLE 2

A polymeric emulsifier was prepared as follows. The following reagents were added to a stirred, temperature controlled reaction vessel:
PIBSA 450 (ex. Italmatch) = 95 g
PIBSA 750 (ex. Italmatch) = 83 g
Pentasize 68 (an alkenyl succinate surfactant, ex. Pentagon Chemicals) = 59 g
PEG 200 (ex. Dow) = 122 g
PEG 600 (ex. BASF) = 66 g
Trimellitic anhydride (ex. Connect Chemicals) = 14 g
RO5030 (an alcohol ethoxylate surfactant, ex. Ecogreen Chem) = 19 g
p-Toluene sulphonic acid (a reaction catalyst, ex. Sigma-Aldrich) = 2 g

The reaction mixture was then heated to 190 °C until an acid value of approximately 10.0 was achieved. At this point the reaction mixture was cooled to room temperature to give the final polymeric emulsifier product.

### EXAMPLE 3

A polymeric lubricant was prepared as follows. The following reagents were added to a stirred, temperature controlled reaction vessel:
PIBSA 450 (ex. Italmatch) = 306 g
PEG 200 (ex. Dow) = 608 g
Citric acid (ex. Sigma-Aldrich) = 56 g
RO5030 (ex. Ecogreen Chem) = 76 g p-Toluene sulphonic acid (a reaction catalyst, ex. Sigma-Aldrich) = 4 g

The reaction mixture was then heated to 190 °C until an acid value of approximately 4.0 was achieved. At this point the reaction mixture was cooled to room temperature to give the final polymeric lubricant product.

### EXAMPLE 4

Example formulations. This example illustrates the polymeric emulsifier from Example 2 versus a comparative tradition emulsifier. The following emulsions were prepared:
Part 1: Oil based concentrates:
   Emulsifier = 20 g
   Example 2 polymeric emulsifier
   TOFA/KOH soap traditional emulsifier
   Naphthenic base oil (ex. Afton stock) = 79.8 g
   Monoisopropanolamine (ex. Sigma-Aldrich; neutralization amine) = 0.2 g
Part 2: Milky emulsion formation
   Oil based concentrate part 1 = 5 g
   Water of differing hardness = 95 g
   Demineralized water
   200 ppm as calcium carbonate
   500 ppm as calcium carbonate
   5,000 ppm as Mg²⁺
   5,000 ppm as Ca²⁺

Ten milky emulsions in total were prepared. The emulsions were tested for foaming and hard water stability using the following tests:
1. CNOMO foaming test. The milky emulsion was circulated by a pump at a rate of 4L per minute. The volume of foam obtained after 30 minutes was determined. The test was stopped if the volume of foam reached the 2000 ml maximum before 30 minutes. 50 ppm as CaCO₃ samples was tested.
2. Hard water stability. This test was in two parts:
   First, the ability of the part 2 milky emulsion to form when the part 1 oil based concentrate was added to water of varying hardness, on initial mixing (0 h), Possible results were as follows:
      a. Emulsion: an opaque milky emulsion formed.
      b. Insoluble: an emulsion did not form. The part 1 oil based concentrate and water appear to form two separate layers.

Second, the presence of any "cream/oil" or "scum" (i.e., precipitation) formation in the emulsion after 24 hours is noted (24 h).

Results were as follows (TOFA/KOH is a reference example)

**Table 1**

| **Water type** | **CNOMO test TOFA/KOH** | **CNOMO test Example 2 polymeric emulsifier** | **Hard water stability TOFA/KOH** | **Hard water stability Example 2 polymeric emulsifier** |
|---|---|---|---|---|
| 50 ppm as Ca-CO₃ | Foam volume = 2000ml after 2 minutes. Test failed. | Foam volume = 1700 ml, after 30 minutes. Test passed. | | |
| Demineralized water | | | 0 h = Emulsion; 24 h = 1.0 ml oily cream | 0 h = Emulsion 24 h = 0.5 ml oily cream |
| 200 ppm as CaCO₃ | | | 0 h = Emulsion; 24 h = Emulsion, with 1.0 ml oily cream and LIGHT scum | 0 h = Emulsion; 24 h = Emulsion with 0.5 ml oily cream and NO scum |
| 500 ppm as CaCO₃ | | | 0 h = Emulsion, 24 h = Emulsion with 1.0 ml oily cream and MODERATE scum | 0 h = Emulsion, 24 h = Emuslion with 0.5 ml oily cream and NO scum |
| 5,000 ppm Ca²⁺ | | | 0 h = Insoluble, 5 ml oily cream; 24 h = Insoluble, 5 ml oily cream | 0 h = Emulsion; 24 h = Emulsion with 0 ml oily cream and NO scum |
| 5,000 ppm Mg²⁺ | | | 0 h = Insoluble, 5 ml oily cream 24 h = Insoluble, 5 ml oily cream | 0 h = Emulsion; 24 h = Emulsion with 0 ml oily cream and NO scum |

### EXAMPLE 5

This comparative example illustrates a semi-synthetic metal working fluid containing polymeric lubricant from Example 3 versus a traditional semi-synthetic metal working fluid.

A finished semi-synthetic metal working fluid was prepared from a pre-made package "Polartech 8123" (boron containing, naphthenic oil based) as follows:
1. Polartech 8123 50%, demineralized water 50% (reference example)
2. Polartech 8123 45%, demineralized water 50%, example 2 polymeric lubricant 5%. (reference example)

Polartech 8123 is commercially available. The lubricity of the fluids was determined by their ability to reduce tool wear on a machine tool milling titanium based blocks as follows:
Process: down-milling.
Metal: Ti-6Al-4V in the beta annealed condition.
Machine: Mori-Seiki SV500.
Tool: Sandvik Coromant CoroMill Plura 16 mm endmill (WC/Co matrix), reground and uncoated
Milling process: Radial entry onto "straight line" shoulder mill cuts; cutting speed = 110 m/min

The time taken, in minutes, for the tool to reach 0.2 mm of wear was taken as a measure of the lubricity of the fluid. The longer the time taken, the more lubricous the fluid. Lubricity results are as follows:

**Table 2**

| **Metal working fluid** | **Time taken (minutes) for 0.2 mm of tool wear @ 110 m/min** |
|---|---|
| Polartech 8123 only | 42 |
| Example 3, polymeric lubricant 5% | 98 |

The results in Table 2 demonstrate the enhance tool life obtained in the presence of the Example 3 polymeric lubricant.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

When the word "about" is used herein in reference to a number, it should be understood that still another embodiment of the invention includes that number not modified by the presence of the word "about."

It should also be understood that, unless clearly indicated to the contrary, in any methods claimed herein that include more than one step or act, the order of the steps or acts of the method is not necessarily limited to the order in which the steps or acts of the method are recited.

## Claims

1. A composition, comprising: a molecular compound comprising at least:
(a) a first portion derived from a polydentate acid, wherein said polydentate acid has three or more -COOH moieties;
(b) a second portion derived from polyalkylene glycol; and
(c) a third portion derived from an anhydride selected from succinic anhydride, alkyl succinic anhydride, alkenyl succinic anhydride and/or poly(isobutenylsuccinic anhydride);
wherein the first portion is covalently bonded to the second portion, and the second portion is covalently bonded to the third portion;
wherein the overall mole ratio of the first portion to the third portion is between 1:0.1 and 1:1, and the overall mole ratio of the third portion to the second portion is between 0.1:1 and 0.5:1, and the overall mole ratio of the first portion to the second portion is between 1:1 to 1:4.

2. The composition of claim 1, wherein at least one first portion is derived from trimellitic acid, trimellitic anhydride and/or citric acid.

3. The composition of claim 1 or 2, **characterized by** one or more of the following i)-iv):
i) wherein at least one second portion is derived from polyethylene glycol;
ii) wherein at least one second portion has a formula -(CH₂-CH₂-O)ₙ-, wherein n is less than or equal to 250, preferably less than or equal to 50, in particular wherein n is inclusively between 1 and 10;
iii) wherein at least one second portion has an M_{w} of less than 20,000 daltons, preferably of less than 10,000 daltons, more preferably of less than 1,000 daltons, even more preferably of less than 750 daltons, or of less than 400 daltons, in particular of less than 250 daltons;
iv) wherein at least one second portion comprises an alkyl chain of length C₁ to C₂₀, preferably of length C₁₀ to C₁₈.

4. The composition of any one of claims 1-3, **characterized by** one or more of the following i)-ii):
i) wherein at least one third portion has an M_{w} of between 100 daltons and 20,000 daltons, preferably between 200 daltons and 600 daltons, more preferably between 200 daltons and 4,000 daltons, even more preferably between 300 daltons and 1,000 daltons, in particular less than 500 daltons, or between 300 daltons and 400 daltons;
ii) wherein at least one third portion has a structure: 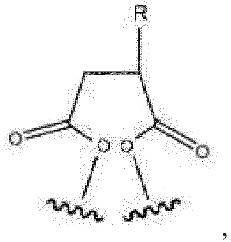 wherein R is an alkyl or an alkenyl group, in particular wherein at least one third portion has a structure: 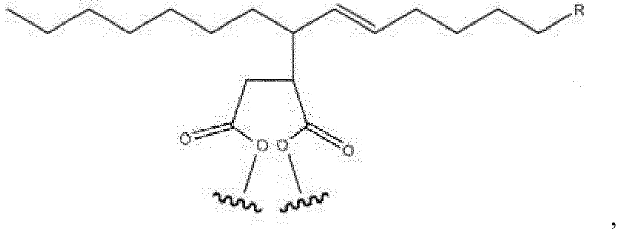 wherein R is an n-alkyl group having between 1 and 6 carbon atoms, inclusively, wherein the wavy lines indicate covalent bonding to other portions of the compound including to polydentate acid portions or derivatives thereof and/or polyalkylene glycol portions.

5. The composition of any one of claims 1-4, wherein the composition complies with one or more of the following i) - iv):
i) wherein the composition comprises more than one first portion;
ii) wherein at least two of the first portions are identical;
iii) wherein the composition comprises more than one second portion, preferably wherein at least two of the second portions are identical;
iv) wherein the composition comprises more than one third portion, preferably wherein at least two of the third portions are identical.

6. The composition of any one of claims 1-5, wherein the overall mole ratio of the first acid portion to the third portion is between 1:0.4 and 1:0.8,
and/or
wherein the overall mole ratio of the third portion to the second portion is between 0.2:1 and 0.3:1,
and/or
wherein the overall mole ratio of the first portion to the second portion is between 1:2 to 1:3.

7. The composition of any one of claims 1-6, wherein the compound has an M_{w} of at least 1000 daltons, preferably between 1000 and 100,000 daltons, more preferably between 2000 and 20,000 daltons, even more preferably between 3000 and 5000 daltons, or between 5000 and 15,000 daltons or between 5000 and 50,000 daltons.

8. The composition of any one of claims 1-7, **characterized by** one or more of the following i) or ii):
i) wherein the compound has an HLB of less than 18, wherein the compound has an HLB of between 8 and 16, or wherein the compound has an HLB of less than 8, preferably wherein the compound has an HLB of less than 3,
preferably wherein the HLB is determined by Griffin's method;
ii) wherein the compound has an acid value of between 2 mg KOH/g and 40 mg KOH/g, preferably between 5 mg KOH/g and 20 mg KOH/g, more preferably between 8 mg and 12 mg KOH/g, or wherein the compound has an acid value of between 1 mg KOH/g and 20 mg KOH/g, preferably between 2 mg and 8 mg KOH/g,
preferably wherein the acid value is determined via ASTM D974.

9. The composition of any one of claims 1-8, wherein the composition is a metalworking fluid, optionally further comprising at least water and/or an oil, preferably wherein the metalworking fluid is a semi-synthetic metalworking fluid.

10. A method, comprising:
reacting a polydentate acid, an anhydride, and a polyalkylene glycol and/or an ethoxylated alcohol to produce a compound as defined in any one of claims 1 to 9.

11. The method of claim 10, wherein the method comprises:
reacting the anhydride, and the polyalkylene glycol and/or the ethoxylated alcohol to produce an intermediate; and
reacting the intermediate with the polydentate acid to produce the compound.

12. The method of claim 10 or 11, wherein the polydentate acid and the polyalkylene glycol and/or the ethoxylated alcohol react via an esterification reaction.

13. The method of any one of claims 10-12, comprising heating the reaction mixture to at least 160 °C, preferably to at least 180 °C, and/or to no more than 230 °C.

14. The method of any one of claims 10-13, **characterized by** one or more of the following i)-ii):
i) comprising reacting until the product has an acid value of at least 4 mg KOH/g, preferably until the product has an acid value of at least 10 mg KOH/g;
ii) wherein the reacting occurs under vacuum or under nitrogen.

15. A composition as defined in any one of claims 1 to 9, comprising:
a compound formed by a method comprising covalently bonding a polydentate acid, a polyalkylene glycol and/or an ethoxylated alcohol, and an anhydride to form the compound, preferably via an esterification reaction, optionally wherein the method is the method according to any one of claims 10-14.

## Patentansprüche

1. Zusammensetzung, umfassend: eine molekulare Verbindung umfassend mindestens:
(a) einen ersten Anteil abgeleitet von einer mehrzähnigen Säure, wobei die mehrzähnige Säure drei oder mehr Einheiten -COOH aufweist;
(b) einen zweiten Anteil abgeleitet von Polyalkylenglycol; und
(c) einen dritten Anteil abgeleitet von einem Anhydrid ausgewählt aus Bernsteinsäureanhydrid, Alkylbernsteinsäureanhydrid, Alkenylbernsteinsäureanhydrid und/oder Poly(isobutenylbernsteinsäureanhydrid);
wobei der erste Anteil kovalent an den zweiten Anteil gebunden ist, und der zweite Anteil kovalent an den dritten Anteil gebunden ist;
wobei das Gesamtmolverhältnis des ersten Anteils zum dritten Anteil zwischen 1:0,1 und 1:1 liegt, und das Gesamtmolverhältnis des dritten Anteils zum zweiten Anteil zwischen 0,1:1 und 0,5:1 liegt, und das Gesamtmolverhältnis des ersten Anteils zum zweiten Anteil zwischen 1:1 bis 1:4 liegt.

2. Zusammensetzung nach Anspruch 1, wobei mindestens ein erster Anteil von Trimellitsäure, Trimellitsäureanhydrid und/oder Zitronensäure abgeleitet ist.

3. Zusammensetzung nach Anspruch 1 oder 2, **gekennzeichnet durch** eines oder mehr der folgenden i)-iv):
i) wobei mindestens ein zweiter Anteil von Polyethylenglycol abgeleitet ist;
ii) wobei mindestens ein zweiter Anteil eine Formel -(CH₂-CH₂-O)ₙ- aufweist, wobei n weniger als oder gleich 250, bevorzugt weniger als oder gleich 50 ist, insbesondere wobei n zwischen 1 und 10, inklusive, liegt;
iii) wobei mindestens ein zweiter Anteil ein M_{W} von weniger als 20.000 Dalton, bevorzugt weniger als 10.000 Dalton, stärker bevorzugt weniger als 1.000 Dalton, noch stärker bevorzugt weniger als 750 Dalton, oder weniger als 400 Dalton, insbesondere weniger als 250 Dalton aufweist;
iv) wobei mindestens ein zweiter Anteil eine Alkylkette mit C₁- bis C₂₀-Länge, bevorzugt C₁₀- bis C₁₈-Länge aufweist.

4. Zusammensetzung nach einem der Ansprüche 1-3, **gekennzeichnet durch** eines oder mehr der folgenden i)-ii):
i) wobei mindestens ein dritter Anteil ein M_{W} von zwischen 100 Dalton und 20.000 Dalton, bevorzugt zwischen 200 Dalton und 600 Dalton, stärker bevorzugt zwischen 200 Dalton und 4.000 Dalton, noch stärker bevorzugt zwischen 300 Dalton und 1.000 Dalton, insbesondere weniger als 500 Dalton, oder zwischen 300 Dalton und 400 Dalton aufweist;
ii) wobei mindestens ein dritter Anteil eine Struktur 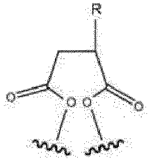 aufweist,
wobei R ein Alkyl- oder ein Alkenylrest ist, insbesondere wobei mindestens ein dritter Anteil eine Struktur 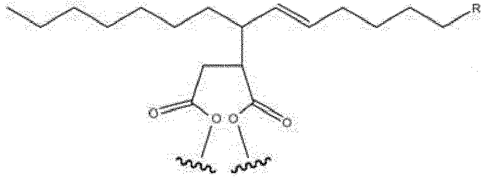 aufweist,
wobei R ein n-Alkylrest mit zwischen 1 und 6 Kohlenstoffatomen, inklusive, ist, wobei die Wellenlinien kovalentes Binden zu anderen Anteilen der Verbindung anzeigen, einschließend mehrzähnige Säureanteile oder Derivate davon und/oder Polyalkylenglycol-Anteile.

5. Zusammensetzung nach einem der Ansprüche 1-4, wobei die Zusammensetzung eines oder mehr der folgenden i) - iv) erfüllt:
i) wobei die Zusammensetzung mehr als einen ersten Anteil umfasst;
ii) wobei mindestens zwei der ersten Anteile identisch sind;
iii) wobei die Zusammensetzung mehr als einen zweiten Anteil umfasst, wobei bevorzugt mindestens zwei der zweiten Anteile identisch sind;
iv) wobei die Zusammensetzung mehr als einen dritten Anteil umfasst, wobei bevorzugt mindestens zwei der dritten Anteile identisch sind.

6. Zusammensetzung nach einem der Ansprüche 1-5, wobei das Gesamtmolverhältnis des ersten Säureanteils zum dritten Anteil zwischen 1:0,4 und 1:0,8 liegt,
und/oder
wobei das Gesamtmolverhältnis des dritten Anteils zum zweiten Anteil zwischen 0,2:1 und 0,3:1 liegt,
und/oder
wobei das Gesamtmolverhältnis des ersten Anteils zum zweiten Anteil zwischen 1:2 bis 1:3 liegt.

7. Zusammensetzung nach einem der Ansprüche 1-6, wobei die Verbindung ein M_{W} von mindestens 1000 Dalton, bevorzugt zwischen 1000 und 100.000 Dalton, stärker bevorzugt zwischen 2000 und 20.000 Dalton, noch stärker bevorzugt zwischen 3000 und 5000 Dalton, oder zwischen 5000 und 15.000 Dalton oder zwischen 5000 und 50.000 Dalton aufweist.

8. Zusammensetzung nach einem der Ansprüche 1-7, **gekennzeichnet durch** eines oder mehr der folgenden i) oder ii):
i) wobei die Verbindung einen HLB von weniger als 18 aufweist, wobei die Verbindung einen HLB von zwischen 8 und 16 aufweist, oder wobei die Verbindung einen HLB von weniger als 8 aufweist, wobei bevorzugt die Verbindung einen HLB von weniger als 3 aufweist,
wobei bevorzugt der HLB durch das Griffin-Verfahren bestimmt wird;
ii) wobei die Verbindung eine Säurezahl von zwischen 2 mg KOH/g und 40 mg KOH/g, bevorzugt zwischen 5 mg KOH/g und 20 mg KOH/g, stärker bevorzugt zwischen 8 mg und 12 mg KOH/g aufweist, oder wobei die Verbindung eine Säurezahl von zwischen 1 mg KOH/g und 20 mg KOH/g, bevorzugt zwischen 2 mg und 8 mg KOH/g aufweist,
wobei bevorzugt die Säurezahl über ASTM D974 bestimmt wird.

9. Zusammensetzung nach einem der Ansprüche 1-8, wobei die Zusammensetzung ein Metallbearbeitungsfluid, gegebenenfalls ferner umfassend mindestens Wasser und/oder ein Öl, ist, wobei bevorzugt das Metallbearbeitungsfluid ein halbsynthetisches Metallbearbeitungsfluid ist.

10. Verfahren, umfassend:
Umsetzen einer mehrzähnigen Säure, eines Anhydrids, und eines Polyalkylenglycols und/oder eines ethoxylierten Alkohols, wobei eine Verbindung wie in einem der Ansprüche 1 bis 9 definiert hergestellt wird.

11. Verfahren nach Anspruch 10, wobei das Verfahren umfasst:
Umsetzen des Anhydrids, und des Polyalkylenglycols und/oder des ethoxylierten Alkohols, wobei ein Zwischenprodukt hergestellt wird; und
Umsetzen des Zwischenprodukts mit der mehrzähnigen Säure, wobei die Verbindung hergestellt wird.

12. Verfahren nach Anspruch 10 oder 11, wobei die mehrzähnige Säure und das Polyalkylenglycol und/oder der ethoxylierte Alkohol über eine Veresterungsreaktion umgesetzt werden.

13. Verfahren nach einem der Ansprüche 10-12, umfassend Erwärmen des Reaktionsgemisches auf mindestens 160 °C, bevorzugt auf mindestens 180 °C, und/oder auf nicht mehr als 230 °C.

14. Verfahren nach einem der Ansprüche 10-13, **gekennzeichnet durch** eines oder mehr der folgenden i)-ii):
i) umfassend Umsetzen bis das Produkt eine Säurezahl von mindestens 4 mg KOH/g aufweist, bevorzugt bis das Produkt eine Säurezahl von mindestens 10 mg KOH/g aufweist;
ii) wobei die Umsetzung unter Vakuum oder unter Stickstoff stattfindet.

15. Zusammensetzung wie in einem der Ansprüche 1 bis 9 definiert, umfassend:
eine Verbindung gebildet durch ein Verfahren umfassend kovalentes Binden einer mehrzähnigen Säure, eines Polyalkylenglycols und/oder eines ethoxylierten Alkohols, und eines Anhydrids, wobei die Verbindung gebildet wird, bevorzugt über eine Veresterungsreaktion, wobei gegebenenfalls das Verfahren das Verfahren gemäß einem der Ansprüche 10-14 ist.

## Revendications

1. Composition comprenant : un composé moléculaire comprenant au moins :
(a) une première portion dérivée d'un acide polydenté, lequel acide polydenté a trois ou plus de trois fragments -COOH ;
(b) une deuxième portion dérivée de polyalkylèneglycol ; et
(c) une troisième portion dérivée d'un anhydride choisi parmi l'anhydride succinique, un anhydride alkylsuccinique, un anhydride alcénylsuccinique et/ou le poly(anhydride isobuténylsuccinique) ;
dans laquelle la première portion est liée de manière covalente à la deuxième portion, et la deuxième portion est liée de manière covalente à la troisième portion ;
dans laquelle le rapport molaire global de la première portion à la troisième portion est compris entre 1/0,1 et 1/1, et le rapport molaire global de la troisième portion à la deuxième portion est compris entre 0,1/1 et 0,5/1, et le rapport molaire global de la première portion à la deuxième portion est compris entre 1/1 et 1/4.

2. Composition selon la revendication 1, dans laquelle au moins une première portion dérive d'acide trimellitique, d'anhydride trimellitique et/ou d'acide citrique.

3. Composition selon la revendication 1 ou 2, **caractérisée par** un ou plusieurs des i) à iv) suivants :
i) au moins une deuxième portion dérive de polyéthylèneglycol ;
ii) au moins une deuxième portion répond à la formule - (CH₂-CH₂-O)ₙ-, où n est inférieur ou égal à 250, de préférence inférieur ou égal à 50, en particulier n est compris entre 1 et 10 bornes comprises ;
iii) au moins une deuxième portion a une M_{w} inférieure à 20 000 daltons, de préférence inférieure à 10 000 daltons, mieux encore inférieure à 1 000 daltons, plus particulièrement inférieure à 750 daltons, ou inférieure à 400 daltons, en particulier inférieure à 250 daltons ;
iv) au moins une deuxième portion comprend une chaîne alkyle en C₁ à C₂₀, de préférence en C₁₀ à C₁₈.

4. Composition selon l'une quelconque des revendications 1 à 3, **caractérisée par** un ou plusieurs des i) et ii) suivants :
i) au moins une troisième portion a une M_{w} comprise entre 100 daltons et 20 000 daltons, de préférence entre 200 daltons et 600 daltons, mieux encore entre 200 daltons et 4 000 daltons, mieux encore entre 300 daltons et 1 000 daltons, en particulier inférieure à 500 daltons, ou entre 300 daltons et 400 daltons ;
ii) au moins une troisième portion a la structure : 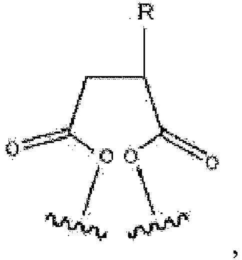 dans laquelle R est un groupe alkyle ou alcényle, en particulier au moins une troisième portion a la structure : 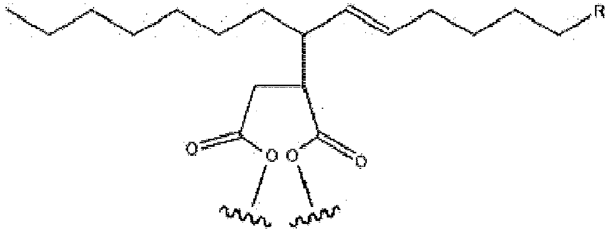 dans laquelle R est un groupe n-alkyle ayant entre 1 et 6 atomes de carbone, bornes comprises, et la ligne ondulée indique une liaison covalente à d'autres portions du composé, y compris aux portions acide polydenté ou leurs dérivés et/ou aux portions polyalkylèneglycol.

5. Composition selon l'une quelconque des revendications 1 à 4, laquelle composition satisfait à un ou plusieurs des i) à iv) suivants :
i) la composition comprend plus d'une première portion ;
ii) au moins deux des premières portions sont identiques ;
iii) la composition comprend plus d'une deuxième portion, de préférence au moins deux des deuxièmes portions sont identiques ;
iv) la composition comprend plus d'une troisième portion, de préférence au moins deux des troisièmes portions sont identiques.

6. Composition selon l'une quelconque des revendications 1 à 5, dans laquelle le rapport molaire global de la première portion acide à la troisième portion est compris entre 1/0,4 et 1/0,8,
et/ou
dans laquelle le rapport molaire global de la troisième portion à la deuxième portion est compris entre 0,2/1 et 0,3/1,
et/ou
dans laquelle le rapport molaire global de la première portion à la deuxième portion est compris entre 1/2 et 1/3.

7. Composition selon l'une quelconque des revendications 1 à 6, dans laquelle le composé a une M_{w} d'au moins 1 000 daltons, de préférence comprise entre 1 000 et 100 000 daltons, mieux encore entre 2 000 et 20 000 daltons, plus particulièrement entre 3 000 et 5 000 daltons, ou entre 5 000 et 15 000 daltons ou entre 5 000 et 50 000 daltons.

8. Composition selon l'une quelconque des revendications 1 à 7, **caractérisée par** un ou plusieurs des i) et ii) suivants :
i) le composé a un HLB inférieur à 18, le composé a un HLB compris entre 8 et 16, ou le composé a un HLB inférieur à 8, de préférence le composé a un HLB inférieur à 3, de préférence lequel HLB est déterminé par la méthode de Griffin ;
ii) le composé a un indice d'acide compris entre 2 mg KOH/g et 40 mg KOH/g, de préférence entre 5 mg KOH/g et 20 mg KOH/g, mieux encore entre 8 mg et 12 mg KOH/g, ou le composé a un indice d'acide compris entre 1 mg KOH/g et 20 mg KOH/g, de préférence entre 2 mg et 8 mg KOH/g, de préférence lequel indice d'acide est déterminé via la norme ASTM D974.

9. Composition selon l'une quelconque des revendications 1 à 8, laquelle composition est un fluide pour l'usinage des métaux, comprenant éventuellement en outre au moins de l'eau et/ou une huile, de préférence dans laquelle le fluide pour l'usinage des métaux est un fluide semi-synthétique pour l'usinage des métaux.

10. Procédé comprenant la réaction d'un acide polydenté, d'un anhydride, et d'un polyalkylèneglycol et/ou d'un alcool éthoxylé pour produire un composé tel que défini dans l'une quelconque des revendications 1 à 9.

11. Procédé selon la revendication 10, lequel procédé comprend :
la réaction de l'anhydride et du polyalkylèneglycol et/ou de l'alcool éthoxylé pour produire un intermédiaire ; et
la réaction de l'intermédiaire avec l'acide polydenté pour produire le composé.

12. Procédé selon la revendication 10 ou 11, dans lequel l'acide polydenté et le polyalkylèneglycol et/ou l'alcool éthoxylé réagissent via une réaction d'estérification.

13. Procédé selon l'une quelconque des revendications 10 à 12, comprenant le chauffage du mélange réactionnel à au moins 160°C, de préférence à au moins 180°C, et/ou à au plus 230°C.

14. Procédé selon l'une quelconque des revendications 10 à 13, **caractérisé par** un ou plusieurs des i) et ii) suivants :
i) il comprend la réaction jusqu'à ce que le produit ait un indice d'acide d'au moins 4 mg KOH/g, de préférence jusqu'à ce que le produit ait un indice d'acide d'au moins 10 mg KOH/g ;
ii) la réaction se déroule sous vide ou sous azote.

15. Composition selon l'une quelconque des revendications 1 à 9, comprenant
un composé formé par un procédé comprenant la liaison covalente d'un acide polydenté, d'un polyalkylèneglycol et/ou d'un alcool éthoxylé, et d'un anhydride pour former le composé, de préférence via une réaction d'estérification, éventuellement dans laquelle le procédé est le procédé de l'une quelconque des revendications 10 à 14.
